# EUROPEAN PATENT APPLICATION

(11) **EP 4 443 591 A1**
(43) Date of publication of application: **09.10.2024**
(21) Application number: 22901200.0
(22) Date of filing: 25.11.2022
(51) Int. Cl.: H01M 10/0569, H01M 10/052, H01M 10/0568

(54) **LITHIUM SECONDARY BATTERY**

(30) Priority: 30.11.2021 JP 2021194989
(71) Applicant: Panasonic Intellectual Property Management Co., Ltd., Kadoma-shi, Osaka 571-0057 (JP)
(72) Inventor: TERADA, Shoshi, Kadoma-shi, Osaka 571-0057 (JP); KANO, Akira, Kadoma-shi, Osaka 571-0057 (JP)
(74) Representative: Novagraaf International SA
(86) International application number: PCT/JP2022/043543
(87) International publication number: WO 2023/100767

(57) **Abstract**

A lithium secondary battery includes a positive electrode, a negative electrode, and a nonaqueous electrolyte having lithium-ion conductivity. In the lithium secondary battery, lithium metal deposits on the negative electrode during charging, and the lithium metal dissolves from the negative electrode during discharging. The nonaqueous electrolyte contains a lithium salt, and a solvent. The solvent includes a first solvent: a chain ether containing no fluorine element, a second solvent: a chain fluorinated ether having a fluorination rate of 60% or more, and a third solvent: a fluorinated ether having a fluorination rate of more than 0% and less than 60%. When the number of moles of the first solvent contained in the nonaqueous electrolyte is denoted by M1, and the number of moles of the third solvent contained in the nonaqueous electrolyte is denoted by M3, a molar ratio M1/M3 of the number of moles M1 to the number of moles M3 is 0.25 or more and less than 3.

## Description

### [Technical Field]

The present disclosure relates to a lithium secondary battery in which lithium metal is used as a negative electrode active material, and specifically, to an improvement of nonaqueous electrolyte in a lithium secondary battery.

### [Background Art]

In a lithium secondary battery, lithium metal deposits on the negative electrode during charging. On the other hand, during discharging, the lithium metal dissolves in the nonaqueous electrolyte.

Patent Literature 1 proposes a lithium secondary battery including a positive electrode, a negative electrode, and a nonaqueous electrolyte having lithium-ion conductivity. At the negative electrode, lithium metal deposits during charging, and the lithium metal is eluted into the nonaqueous electrolyte during discharging. The nonaqueous electrolyte contains a lithium salt and a solvent. The solvent includes a fluorinated ether, and the fluorinated ether has a fluorination rate of more than 0% and 60% or less.

Patent Literature 2 proposes a nonaqueous electrolyte for use in a nonaqueous electrolyte secondary battery including a positive electrode, a negative electrode, and a nonaqueous electrolyte having lithium-ion conductivity, in which at the negative electrode, lithium metal deposits during charging, and the lithium metal is eluted into the nonaqueous electrolyte during discharging. The nonaqueous electrolyte contains an electrolyte salt and a solvent. The solvent includes a first ether compound represented by a specific formula, and a second ether compound represented by a specific formula and having a fluorination rate of 60% or more. The proportion of the total amount of the first ether compound and the second ether compound in the solvent is 80 vol% or more.

### [Citation List]

### [Patent Literature]

Patent Literature 1: Japanese Laid-Open Patent Publication No. 2019-216094
Patent Literature 2: International Publication WO2020/006125

### [Summary of Invention]

### [Technical Problem]

There is a demand for a lithium secondary battery that can provide high discharge capacity even after repeated charging and discharging.

### [Solution to Problem]

One aspect of the present disclosure relates to a lithium secondary battery, including: a positive electrode; a negative electrode; and a nonaqueous electrolyte having lithium-ion conductivity, wherein
lithium metal deposits on the negative electrode during charging, and the lithium metal dissolves from the negative electrode during discharging,
the nonaqueous electrolyte contains a lithium salt, and a solvent,
the solvent includes
a first solvent: a chain ether containing no fluorine element,
a second solvent: a chain fluorinated ether having a fluorination rate of 60% or more, and
a third solvent: a fluorinated ether having a fluorination rate of more than 0% and less than 60%, and
when the number of moles of the first solvent contained in the nonaqueous electrolyte is denoted by M1, and the number of moles of the third solvent contained in the nonaqueous electrolyte is denoted by M3, a molar ratio M1/M3 of the number of moles M1 to the number of moles M3 is 0.25 or more and less than 3.

### [Advantageous Effects of Invention]

In a lithium secondary battery, it is possible to reduce the decrease in discharge capacity even after repeated charging and discharging.

### [Brief Description of Drawings]

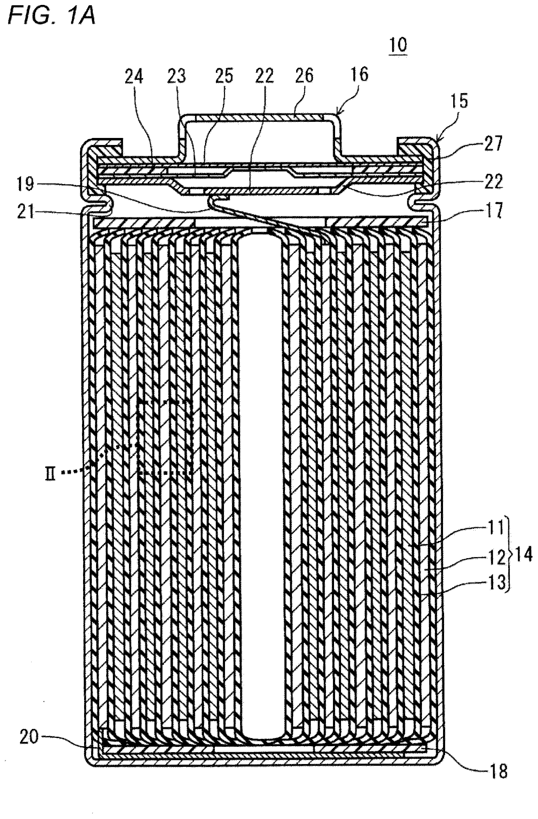

[FIG. 1A] FIG. 1A is a longitudinal cross-sectional view of a lithium secondary battery according to an embodiment.

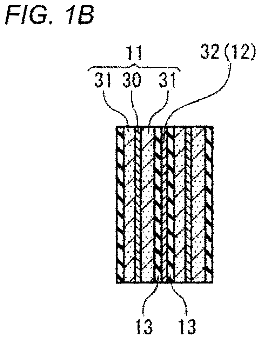

[FIG. 1B] FIG. 1B is an enlarged cross-sectional view of the lithium secondary battery in a fully discharged state, taken along a line II in FIG. 1A.

### [Description of Embodiments]

While the novel features of the invention are set forth particularly in the appended claims, the invention, both as to organization and content, will be better understood and appreciated, along with other objects and features thereof, from the following detailed description taken in conjunction with the drawings.

At the negative electrode of a lithium secondary battery, lithium metal dissolves during discharging, and lithium metal deposits during charging. On the negative electrode, lithium metal is almost always present, and therefore, side reactions with the nonaqueous electrolyte easily occur. Furthermore, on the negative electrode, an SEI (solid electrolyte interface) film derived from a component contained in the nonaqueous electrolyte is formed during charging. In other words, during charging, the deposition of lithium metal and the formation of an SEI film proceed in parallel at the negative electrode. Therefore, it is difficult to cause the dissolution and the deposition of lithium metal uniformly at the negative electrode as a whole by charging and discharging, and the variations in the dissolution and the deposition become noticeable with repeating charging and discharging. Under such a condition, lithium metal tends to deposit in the form of dendrites. Lithium metal deposited in the form of dendrites (hereinafter sometimes referred to as lithium dendrites) may be isolated in some cases, and the discharge capacity tends to decrease. Moreover, when the specific surface area of the negative electrode increases due to the growth of lithium dendrites, side reactions occur noticeably, and in addition, the changes in volume during charging and discharging become significant. If the negative electrode expands unevenly due to the growth of lithium dendrites during charging, the stress caused by the expansion is hardly relaxed, leading to fracture or breakage of the negative electrode. As a result, the discharge capacity tends to decrease. In this way, even though the decrease in discharge capacity, which is due to the variations in charge-discharge reactions and the growth of lithium dendrites, may not be noticeable when the number of charge-discharge cycles is relatively small, it becomes noticeable as the number of charge-discharge cycles is increased (e.g., to 100 or more cycles), and the width of decrease in the discharge capacity tends to increase. It is even difficult to actually improve the capacity retention rate only by several percentage (e.g., 2 to 3%). This is because various factors are involved in variations in charge-discharge reactions, and depending on the balance between individual factors, the variations cannot necessarily be improved.

In view of the above, (1) a lithium secondary battery according to one aspect of the present disclosure includes a positive electrode, a negative electrode, and a nonaqueous electrolyte having lithium-ion conductivity. In the lithium secondary battery, lithium metal deposits on the negative electrode during charging, and the lithium metal dissolves from the negative electrode during discharging. The nonaqueous electrolyte contains a lithium salt and a solvent. The solvent includes a first solvent: a chain ether containing no fluorine element, a second solvent: a chain fluorinated ether having a fluorination rate of 60% or more, and a third solvent: a chain fluorinated ether having a fluorination rate of more than 0% and less than 60%. When the number of moles of the first solvent contained in the nonaqueous electrolyte is denoted by M1, and the number of moles of the third solvent contained in the nonaqueous electrolyte is denoted by M3, a molar ratio M1/M3 of the number of moles M1 to the number of moles M3 is 0.25 or more and less than 3.

In the present disclosure, since the lithium secondary battery includes the nonaqueous electrolyte as described above, the decrease in discharge capacity after repeated charging and discharging can be reduced. Therefore, a high capacity-retention rate can be ensured. For example, as compared to Patent Literature 1 or 2, even after charging and discharging repeated many times, the decrease in discharge capacity can be reduced, and a high capacity-retention rate can be ensured.

In the present disclosure, the effects as above can be obtained presumably because of the following reasons. Lithium metal is almost always present at the negative electrode of a lithium secondary battery. Due to a high reducing power of lithium metal, upon contact of a solvent contained in the nonaqueous electrolyte with such a negative electrode, the decomposition or rection of the solvent easily occurs in general. In the case where the reduction stability of the solvent is high, its oxidation stability is conversely low, leading to easy occurrence of the decomposition or reaction of the solvent at the positive electrode. In the present disclosure, the nonaqueous electrolyte contains a first solvent, by which high reduction stability can be obtained, and the nonaqueous electrolyte further contains a second solvent and a third solvent, by which relatively high oxidation stability can be ensured while a certain degree of reduction stability is secured. When the molar ratio M1/M3 of the first solvent to the third solvent is 0.25 or more and less than 3, the reduction stability and the oxidation stability can be ensured at a relatively high level in a well-balanced manner. In addition, the first solvent and the third solvent have a tendency to solvate lithium ions, whereas the second solvent with a high fluorination rate has a tendency to hardly solvate lithium ions and reduce the viscosity of the nonaqueous electrolyte. Therefore, by using the second solvent together with the first solvent and the third solvent, the viscosity of the nonaqueous electrolyte can be lowered, and even in a solvated state by at least one of the first solvent and the third solvent, the migration speed of lithium ions can be enhanced. Furthermore, when the molar ratio M1/M3 is 0.25 or more and less than 3, the solvent is less likely to be reduced at the negative electrode, so that the SEI film is formed more uniformly and the growth of lithium dendrites is suppressed. At the positive electrode, lithium ions, in a solvated state by at least one of the first solvent and the third solvent, come in contact with the solvent. Therefore, the solvent is relatively less likely to be oxidized at the positive electrode. Thus, at both the positive electrode and the negative electrode, the consumption of electric charge for side reactions is reduced, and the charge-discharge reactions are allowed to proceed more uniformly. Presumably as a result, the decrease in discharge capacity can be reduced even though the number of charge-discharge cycles is increased. For example, even after charging and discharging repeated 100 cycles or more, the decrease in discharge capacity can be suppressed, and a relatively high capacity-retention rate can be ensured.

When the molar ratio M1/M3 is less than 0.25, the reduction stability of the solvent at the negative electrode is lowered, and electric charge tends to be consumed for side reactions at the negative electrode, resulting in a decrease in discharge capacity. As the number of charge-discharge cycles is increased (e.g., to 100 or more cycles), the decrease in discharge capacity becomes significant. When the molar ratio M1/M3 is 3 or more, the oxidation stability of the solvent at the positive electrode is lowered, and electric charge is consumed for side reactions at the positive electrode, resulting in a decrease in discharge capacity. Even in the case where the decrease in discharge capacity is not so problematic during a small number of charge-discharge cycles (e.g., 10 or less or 50 or less cycles), the decrease in discharge capacity becomes significant when the number of charge-discharge cycles is increased (e.g., to 100 or more cycles).

In the present disclosure, the fluorination rate of the fluorinated ether is the proportion of the number of fluorine elements in the total number of fluorine elements and hydrogen elements contained one molecule of the fluorinated ether. This proportion is expressed as a percentage (%). Therefore, the fluorination rate has the same meaning as the substitution ratio (percentage (%)) of hydrogen elements by fluorine elements, in an ether in which all the fluorine elements in the fluorinated ether are replaced with hydrogen elements.

(2) In the above (1), when the number of moles of the second solvent contained in the nonaqueous electrolyte is denoted by M2, the molar ratio M2/M3 of the number of moles M2 to the number of moles M3 is preferably 0.5 or more and 6 or less. In this case, a high migration speed of lithium ions can be more easily ensured, the charge-discharge reactions are allowed to proceed more smoothly, and the balance between the reduction stability and the oxidation stability can be easily adjusted.
(3) In the nonaqueous electrolyte of the lithium secondary battery according to the above (1) or (2), when the number of moles of the second solvent contained in the nonaqueous electrolyte is denoted by M2, the molar ratio M2/(M1+M3) of the number of moles M2 to a sum of the number of moles M1 and the number of moles M3 may be 0.4 or more and 2 or less. In this case, a high migration speed of lithium ions is more likely to be ensured, and the charge-discharge reactions are allowed to proceed more smoothly. Moreover, the balance between the reduction stability and the oxidation stability can be more easily adjusted.
(4) In any one of the above (1) to (3), the ratio (M1+M3)/M_{L} of a sum of the number of moles M1 and the number of moles M3 to the number of moles M_{L} of Li ions contained in the nonaqueous electrolyte may be 1.5 or more and 7 or less. In this case, the oxidation stability and the reduction stability of the solvent that solvates Li ions can be easily balanced, so that the side reactions are reduced at both the negative electrode and the positive electrode, and the decrease in discharge capacity can be further suppressed.

The molar ratio between the components of the nonaqueous electrolyte may be the molar ratio therebetween in the nonaqueous electrolyte used for assembling a lithium secondary battery. The molar ratio between the components of the nonaqueous electrolyte may be the molar ratio therebetween in the nonaqueous electrolyte taken out from the lithium secondary battery.

The lithium secondary battery according to the present disclosure is sometimes referred to as a lithium-metal secondary battery. In the lithium secondary battery, for example, 70% or more of the rated capacity is developed through deposition and dissolution of lithium metal. The migration of electrons at the negative electrode during charging and during discharging is mainly due to the deposition and dissolution of lithium metal at the negative electrode. Specifically, 70 to 100% (e.g., 80 to 100%, 90 to 100%) of the migration of electrons (in other words, current flow) at the negative electrode during charging and during discharging is due to the deposition and dissolution of lithium metal. That is, the negative electrode of the lithium secondary battery differs from a negative electrode at which the migration of electrons at the negative electrode during charging and during discharging is mainly due to absorption and release of lithium ions into and from the negative electrode active material (graphite etc.).

In a battery in which lithium metal deposits at the negative electrode during charging, the open circuit voltage (OCV) of the negative electrode at full charge is, for example, 70 mV or less versus lithium metal (lithium dissolution/deposition potential). Here, "at full charge" means a state in which the battery is charged until the state of charge (SOC) reaches, for example, 0.98×C or more, where C is the rated capacity of the battery. The OCV of the negative electrode at full charge can be measured by disassembling a fully charged battery in an argon atmosphere, to take out the negative electrode, and assembling a cell using the taken electrode and lithium metal as a counter electrode. The nonaqueous electrolyte of the cell may be of the same composition as that in the disassembled battery.

(5) In any one of the above (1) to (4), the first solvent may include at least one selected from compounds represented by the following formula (1): 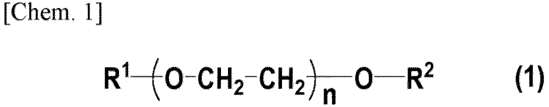 (in the formula, R¹ and R² are each independently an alkyl group having 1 to 5 carbon atoms, and n is an integer of 0 or more and 4 or less.)
(6) In any one the above (1) to (5), the second solvent may include at least one selected from compounds represented by the following formula (2): 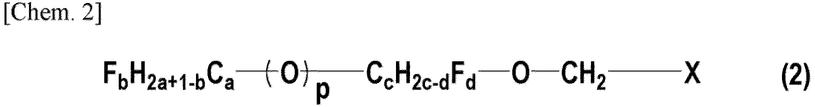 [in the formula, the number a of carbon elements in an alkyl group or a fluorinated alkyl group is an integer of 1 or more, b is the number of fluorine elements, p is 0 or 1, the number c of carbon elements in a fluorinated alkylene group is an integer of 1 or more, the number d of fluorine elements is an integer of 2 or more, and X is a group represented by the following formula (2a) or (2b): 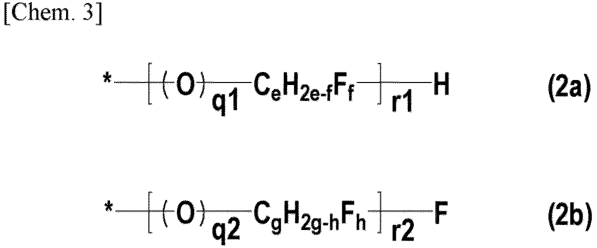 (in the formulas, q1 and q2 are each independently 0 or 1, the numbers e and g of carbon elements in an alkyl group or a fluorinated alkyl group are each independently an integer of 1 or more, and f and h are each the number of fluorine elements, and r1 and r2 are each independently 0 or 1.)]
(7) In the above (6), the numbers a, c, e, and g may be each independently an integer of 1 or more and 5 or less.
(8) In any one of the above (1) to (6), the third solvent may include at least one selected from compounds represented by the following formula (3A): 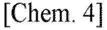 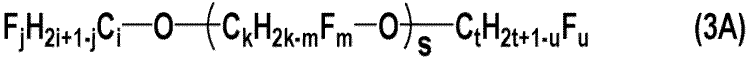 (in the formula, the numbers i and t of carbon elements in an alkyl group or a fluorinated alkyl group are each independently an integer of 1 or more, and the number k of carbon elements in an alkylene group or a fluorinated alkylene group is an integer of 1 or more, j, m, and u each independently represent the number of fluorine elements, and s is an integer of 0 or more and 4 or less.)
(9) In the above (8), the numbers i, k, and t may be each independently an integer of 1 or more and 5 or less.
(10) In any one of the above (1) to (9), the third solvent may include at least one selected from compounds represented by the following formula (3B): 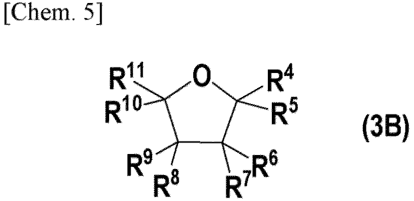 (in the formula, R⁴ to R¹¹ each independently represent hydrogen element, fluorine element, an alkyl group, or a fluorinated alkyl group, and at least one of R⁴ to R¹¹ is fluorine element or a fluorinated alkyl group.)

In the following, the lithium secondary battery of the present disclosure will be described specifically for each component, including the above (1) to (10). At least one of the above (1) to (10) and at least one of the elements described below may be combined within a range where no technical contradiction arises.

### (Nonaqueous electrolyte)

The nonaqueous electrolyte contains a solvent (specifically, a nonaqueous solvent) and a lithium salt dissolved in the solvent. The nonaqueous electrolyte in a liquid form can be prepared by dissolving a lithium salt in a nonaqueous solvent. When the lithium salt is dissolved in the nonaqueous solvent, lithium ions and anions are produced. The nonaqueous electrolyte has lithium-ion conductivity.

The nonaqueous electrolyte may be in a liquid form or in a gel form. The nonaqueous electrolyte in a gel form contains a lithium salt, a solvent, and a matrix polymer. As the matrix polymer, for example, a polymer material that absorbs a solvent and turns into a gel is used. Examples of the polymer material include a fluorocarbon resin, an acrylic resin, and a polyether resin.

### (Lithium salt)

As the anions constituting the lithium salt, for example, any known anions utilized for nonaqueous electrolyte in a lithium secondary battery can be used. Specific examples include BF₄⁻, ClO₄⁻, PF₆⁻, CF₃SO₃⁻, CF₃CO₂⁻, anions of an imide compound, and anions of an oxalate complex. Examples of the anions of an imide compound include N(SO₂F)₂⁻ and N(SO₂CF₃)₂⁻. The anions of an oxalate complex may contain at least one of boron and phosphorus. Examples of the anions of an oxalate complex include bisoxalateborate anion, BF₂(C₂O₄)⁻, PF₄(C₂O₄)⁻, and PF₂(C₂O₄)₂⁻. The nonaqueous electrolyte may contain one kind of anions, or two or more kinds of anions in combination. In other words, the nonaqueous electrolyte may contain one kind of lithium salt, or may contain two or more kinds of lithium salts in combination.

From the viewpoint that lithium metal is likely to deposit more uniformly in the form of fine particles, the nonaqueous electrolyte may contain at least an oxalate complex anion. The nonaqueous electrolyte may include an oxalate complex anion, and at least one selected from, of the aforementioned anions, anions other than oxalate complex anions. Examples of the anions other than oxalate complex anions include at least one selected from PF₆⁻ and anions of an imide compound.

### (Solvent)

The solvent contained in the nonaqueous electrolyte includes a first solvent, a second solvent, and a third solvent. The solvent may contain, as necessary, a solvent (fourth solvent) other than the first to third solvents.

### (First solvent)

A chain ether as the first solvent may have, in its molecule, one ether bond (-O-), or two or more ether bonds. In the molecule, the number of ether bonds is, for example, 5 or less, and may be 4 or less, or 3 or less. In view of ensuring high affinity for lithium ions, the first solvent may include at least a chain ether having 2 or more (e.g., 2 or more and 5 or less, or 2 or more and 4 or less) ether bonds and containing no fluorine element.

The first solvent may include, for example, at least one selected from compounds represented by the following formula (1A). 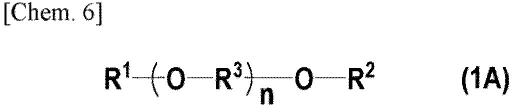 (in the formula, R¹ and R² are each independently an alkyl group having 1 to 5 carbon atoms, R³ is an alkylene group having 1 to 5 carbon atoms, and n is an integer of 0 or more and 4 or less.)

The number of carbon atoms in the alkylene group represented by R³ may be 2 or more and 4 or less, and may be 2 or 3. When n is 2 or more, the formula (1A) includes two or more units each represented by -O-R³-. In this case, R³ may be the same in at least two units, or R³ may be different in all the units.

Among the compounds represented by the formula (1A), compounds represented by the following formula (1) are preferred. In other words, the first solvent may include at least one selected from the compounds represented by the formula (1). The formula (1) corresponds to the case where the alkylene group R³ in the formula (1A) is an ethylene group. 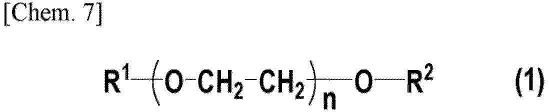 (in the formula, R¹, R², and n are the same as in the formula (1A).)

In each of the formulas (1A) and (1), the number of carbon atoms in the alkyl group represented by each of R¹ and R² is, for example, 1 or more and 5 or less, may be 1 or more and 3 or less, and may be 1 or 2. R¹ and R² may be the same or different.

The symbol n may be an integer of 0 or more and 3 or less. From the viewpoint of ensuring high affinity for lithium ions, n is preferably an integer of 1 or more and 3 or less, and may be 1 or 2.

When a compound represented by the formula (1A) or (1) (esp., a compound represented by the formula (1)) is used, lithium ions can be easily solvated, but on the other hand, due to the co-presence of the third solvent in the nonaqueous electrolyte, the side reactions that the solvent involves can be suppressed at both the positive electrode and the negative electrode, and charge-discharge reactions can proceed easily. Therefore, the decrease in discharge capacity is likely to be suppressed.

Specific examples of the first solvent include diethyl ether, dipropyl ether, diisopropyl ether, dibutyl ether, dihexyl ether, ethyl vinyl ether, butyl vinyl ether, methyl phenyl ether, ethylphenyl ether, butylphenyl ether, pentylphenyl ether, methoxytoluene, benzyl ethyl ether, diphenyl ether, dibenzyl ether, o-dimethoxybenzene, 1,1-dimethoxymethane, and 1,1-diethoxyethane. Preferably, the first solvent includes at least a chain ether having two or more ether bonds. Specific examples of such a chain ether include 1,2-dimethoxyethane (DME), 1,2-diethoxyethane, 1,2-dibutoxyethane, diethylene glycol dimethyl ether, diethylene glycol diethyl ether, diethylene glycol ethyl methyl ether, diethylene glycol dibutyl ether, and triethylene glycol dimethyl ether. The first solvent, however, is not limited to these specific examples.

The nonaqueous electrolyte may contain one kind of first solvent, or two or more kinds of first solvents in combination. The first solvent may include a chain ether having 2 or more (e.g., 2 or more and 5 or less, or 2 or more and 4 or less) ether bonds in a proportion of 80 mol% or more, and the proportion may be 90 mol% or more, and may be 100 mol%.

### (Second solvent)

A chain ether as the second solvent may have, in its molecule, one ether bond (-O-), or two or more ether bonds. In the molecule, the number of ether bonds is, for example, 5 or less, and may 3 or less. In the molecule, the number of ether bonds may be, for example, 1 or 2.

The second solvent and the third solvent are differentiated by the fluorination rate. The fluorination rate of the second solvent is 60% or more. When the nonaqueous electrolyte contains the second solvent having such a fluorination rate, from the balance with the first solvent and the third solvent, the excessive solvation of lithium ions is suppressed, and the oxidative decomposition of the first solvent or the reductive decomposition of the third solvent can be suppressed low. Furthermore, since the viscosity of the nonaqueous electrolyte can be kept low, the lithium salt can easily dissolve in the solvent, and the migration speed of lithium ions can be improved. This allows the charge-discharge reactions to proceed more uniformly. The fluorination rate of the second solvent is 100% or less.

The second solvent may include at least a fluorinated ether having a fluorination rate of 60% or more and 90% or less (or 80% or less), 65% or more (or 70% or more) and 90% or less, or 65% or more (or 70% or more) and 80% or less. The proportion of the fluorinated ether having such a fluorination rate in the second solvent is, for example, 80 mol% or more, may be 90 mol% or more, and may be 100 mol%.

The second solvent may include at least one selected from compounds represented by the following formula (2) (specifically, chain ethers). 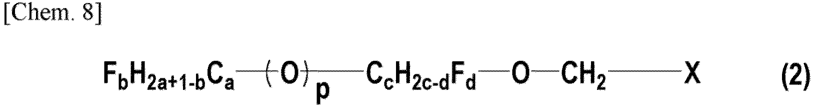 [in the formula, the number a of carbon elements in an alkyl group or a fluorinated alkyl group is an integer of 1 or more, b is the number of fluorine elements, p is 0 or 1, the number c of carbon elements in a fluorinated alkylene group is an integer of 1 or more, the number d of fluorine elements is an integer of 2 or more, and X is a group represented by the following formula (2a) or (2b): 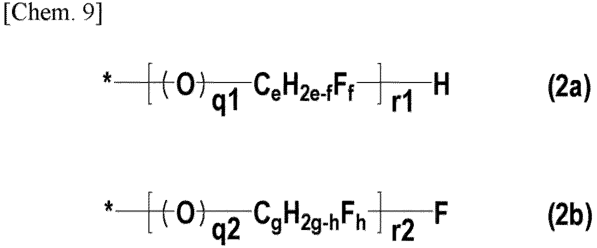 (in the formulas, q1 and q2 are each independently 0 or 1, the numbers e and g of carbon elements in an alkyl group or a fluorinated alkyl group are each independently an integer of 1 or more, and f and h are each the number of fluorine elements, and r1 and r2 are each independently 0 or 1.)]

In the formulas (2a) and (2b), the * mark indicates a bonding hand for bonding with methylene group -CH₂- in the formula (2).

The fluorinated ether represented by the formula (2) includes a unit represented by (-C_{c}H_{2c-d}F_{d}-O-CH₂-) (where d is an integer of 2 or more). Therefore, the affinity for lithium ions of the ether bond (-O-) is weakened, and thus, the excessive solvation of lithium ions can be suppressed, and the lithium-ion conductivity of the nonaqueous electrolyte can be improved. Furthermore, even when the fluorinated ether comes in contact with the positive electrode, the above unit ensures a high affinity for a polyvalent metal such as a transition metal contained in the positive electrode, which allows for easy contact of the second solvent having high oxidation stability with the positive electrode, and thus, the oxidative decomposition of the solvent can be relatively reduced. Therefore, the compound represented by the formula (2) can be advantageously used in terms of reducing the decrease in discharge capacity.

Each of the numbers a, e, and g of carbon elements in the alkyl group or fluorinated alkyl group may be an integer of 1 or more and 5 or less, may be an integer of 1 or more and 4 or less, and may be an integer of 1 or more and 3 or less. Here, a and e may be the same or different. Also, a and g may be the same or different. The number c of carbon elements in the fluorinated alkylene group may be an integer of 1 or more and 5 or less, may be an integer of 1 or more and 4 or less (or 2 or more and 4 or less), and may be an integer of 1 or more and 3 or less (or 2 or 3). At least two of a, e, g, and c may be the same, or all may be different.

The number b of fluorine elements is determined depending on the number of carbon elements in the alkyl group or fluorinated alkyl group, so that the fluorination rate of the entire molecule falls within the above range. The number d of fluorine elements in the fluorinated alkylene group is preferably an integer of 2 or more, and may be an integer of 2 or more and 8 or less. The number d is also determined depending on the number c of carbon elements in the fluorinated alkylene group, so that the fluorination rate of the entire molecule falls within the above range.

Each of the numbers p and q1 (or q2) of the ether bonds (-O-) may be 1, but is preferably 0.

Specific examples of the second solvent include 1,1,2,2-tetrafluoroethyl 2,2,2-trifluoroethyl ether, 1,1,2,2-tetrafluoroethyl 2,2,3,3-tetrafluoropropyl ether. The second solvent, however, is not limited to these specific examples.

The nonaqueous electrolyte may contain one kind of second solvent, or two or more kinds of second solvents in combination. The second solvent may include at least a fluorinated ether having two or less ether bonds (-O-) and a fluorination rate within the above range. In this case, higher lithium-ion conductivity is likely to be obtained. The proportion of such a fluorinated ether in the second solvent may be, for example, 80 mol% or more, or 90 mol% or more, or 100 mol%.

### (Third solvent)

A fluorinated ether as the third solvent may be a chain ether or a cyclic ether. The fluorinated ether as the third solvent may have, in its molecule, one ether bond (-O-), or two or more ether bonds. In the molecule, the number of ether bonds is, for example, 5 or less, and may be 3 or less. In the molecule, the number of ether bonds may be 1 or 2. The cyclic fluorinated ether may be, for example, 5- to 10-membered, may be 5- to 8-membered, and may be 5- or 6-membered. From the viewpoint of ensuring the affinity for lithium ions of the third solvent while ensuring an appropriate fluorination rate, the third solvent preferably includes at least one selected from the group consisting of a chain fluorinated ether having two or more ether bonds and a cyclic fluorinated ether having one or more ether bonds.

The fluorination rate of the third solvent is more than 0% and less than 60%. When the nonaqueous electrolyte contains the third solvent, from the balance with the first solvent and the second solvent, the reductive decomposition of the solvent at the negative electrode is suppressed, and a more uniform SEI film is likely to be formed, and also, the oxidative decomposition of the solvent at the positive electrode can be suppressed. Therefore, even when charging and discharging are repeated, the charge-discharge reactions are allowed to proceed more uniformly, and the decrease in discharge capacity can be reduced.

The third solvent may include at least a fluorinated ether having a fluorination rate of 10% or more and 50% or less, 10% or more and 40% or less (or 30% or less), 20% or more and 40% or less (or 0% or less), or 25% or more and 40% or less (or 30% or less). With a fluorinated ether having such a fluorination rate, higher discharge capacity can be ensured even after charging and discharging repeated many times (e.g., 100 times or more). The proportion of the fluorinated ether having such a fluorination rate in the third solvent is, for example, 80 mol% or more, may be 90 mol% or more, and may be 100 mol%.

The third solvent may include at least one selected from compounds represented by the following formula (3A) (specifically, chain ethers). 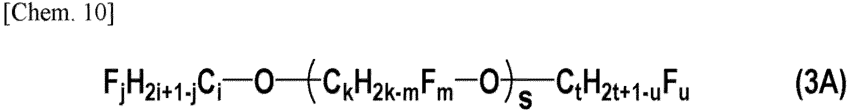 (in the formula, the numbers i and t of carbon elements in an alkyl group or a fluorinated alkyl group are each independently an integer of 1 or more, and the number k of carbon elements in an alkylene group or a fluorinated alkylene group is an integer of 1 or more, j, m, and u each independently represent the number of fluorine elements, and s is an integer of 0 or more and 4 or less.)

Each of the numbers i and t of carbon elements in the alkyl group or the fluorinated alkyl group may be an integer of 1 or more and 5 or less, and may be an integer of 1 or more and 4 or less. Here, i and t may be the same or different.

The number k of carbon elements in the alkylene group or fluorinated alkylene group may be an integer of 1 or more and 5 or less, may be an integer of 1 or more and 4 or less (or 2 or more and 4 or less), and may be an integer of 1 or more and 3 or less (or 2 or 3). At least two of i, k, and t may be the same, or all may be different.

The numbers j and u of fluorine elements are each determined depending on the number of carbon elements in the alkyl group or fluorinated alkyl group. The number k of fluorine elements is determined depending on the number of carbon elements in the alkylene group or fluorinated alkylene group. In addition, the numbers j, k, and u are determined so that the fluorination rate of the entire molecule falls within the above range.

The symbol s corresponds to the number of repeating oxyalkylene groups or oxyfluorinated alkylene groups. The symbol s may be an integer of 0 or more and 4 or less, may be an integer of 0 or more and 3 or less, and may be 0, 1, or 2. From the viewpoint of ensuring the affinity for lithium ions of the third solvent while ensuring an appropriate fluorination rate, s is preferably 1 or more, may be an integer of 1 to 3, and may be 1 or 2. When s is 2 or more, in the fluorinated ether represented by the formula (3A), at least two of the units each represented by -CₖH₂ₖ₋ₘFₘ-O- may be the same or all may be different.

The third solvent may include at least one selected from compounds represented by the following formula (3B) (specifically, cyclic ethers). 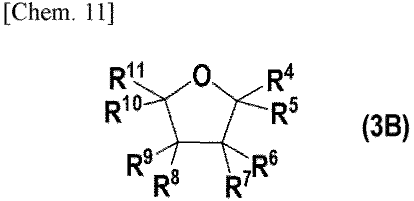 (in the formula, R⁴ to R¹¹ each independently represent hydrogen element, fluorine element, an alkyl group, or a fluorinated alkyl group, and at least one of R⁴ to R¹¹ is fluorine element or a fluorinated alkyl group.)

The number of carbon atoms in the alkyl group or fluorinated alkyl group represented by R⁴ to R¹¹ is, for example, 1 or more and 6 or less, may be 1 or more and 4 or less, may be 1 or more and 3 or less, and may be 1 or 2. The alkyl group or fluorinated alkyl group may be in the form of a branched chain, but is preferably in the form of a straight chain.

The number of fluorine elements included in R⁴ to R¹¹ (i.e., the number of fluorine elements directly bonded to the tetrahydrofuran ring and the number of fluorine elements contained in the fluorinated alkyl group) is selected so that the fluorination rate falls within the range of that of the third solvent.

Specific examples of the third solvent include

CF₃-O-CH₂CH₂-O-CH₃,

CF₃CH₂-O-CH₂CH₂-O-CH₃,

CF₃CH₂-O-CH₂CH₂-O-CF₃,

CF₃CH₂-O-CH₂CH₂-O-CH₂CF₃,

CH₃-O-CH₂CF₂CF₂CH₂-O-CH₃,

CF₃CH₂-O-CH(CF₃)CH₂-O-CH₂CF₃,

CF₃CH₂-O-(CH₂CH₂-O)₃-CH₂CF₃,

3 -monofluorotetrahydrofuran,
3,3 -difluorotetrahydrofuran,
3,4-difluorotetrahydrofuran, and
3,3,4,4-tetrafluorotetrahydrofuran. The third solvent, however, is not limited to these specific examples.

The nonaqueous electrolyte may contain one kind of third solvent, or two or more kinds of third solvents in combination.

### (Proportion of each solvent)

In the present disclosure, the molar ratio M1/M3 of the number of moles M1 of the first solvent to the number of moles M3 of the third solvent contained in the nonaqueous electrolyte is 0.25 or more and less than 3. When the molar ratio M1/M3 is within such a range, high discharge capacity can be ensured even when charging and discharging are repeated many times. The molar ratio M1/M3 may be 0.3 or more (or 0.33 or more) and 2 or less, and may be 0.4 or more (or 0.5 or more) and 2 or less. From the viewpoint of ensuring a higher capacity-retention rate, M1/M3 is preferably 0.3 or more (or 0.33 or more) and 1.7 or less, may be 0.4 or more (or 0.5 or more) and 1.7 or less, may be 0.3 or more (or 0.33 or more) and 1 or less, and may be 0.4 or more (or 0.5 or more) and 1 or less.

The molar ratio M2/M3 of the number of moles M2 of the second solvent to the number of moles M3 of the third solvent contained in the nonaqueous electrolyte is, for example, 0.5 or more and 6 or less, may be 0.7 or more and 3 or less, and may be 0.8 or more and 2.7 or less. When the molar ratio M2/M3 is within such a range, combined with the molar ratio M1/M3 being within the above range, it is possible to allow the charge-discharge reactions to proceed smoothly, and also, since the balance between the reduction stability and the oxidation stability can be easily adjusted, it is possible to ensure a higher capacity-retention rate.

In the nonaqueous electrolyte, the molar ratio M2/(M1+M3) of the number of moles M2 to the sum of the number of moles M1 and the number of moles M3 may be, for example, 0.4 or more and 2 or less. From the viewpoint that the charge-discharge reactions are allowed to proceed more smoothly, and a higher capacity-retention rate is likely to be obtained, the molar ratio M2/(M1+M3) is preferably 0.4 or more and 1.6 or less (or 1.4 or less), and more preferably 0.9 or more and 1.6 or less (or 1.4 or less).

The ratio (M1+M3)/M_{L} of the sum of the number of moles M1 and the number of moles M3 to the number of moles M_{L} of Li ions contained in the nonaqueous electrolyte is, for example, 1.5 or more and 7 or less. From the viewpoint that the side reactions at the positive electrode and the negative electrode can be more effectively suppressed, and a higher capacity-retention rate is likely to be obtained, the molar ratio (M1+M3)/M_{L} may be 2 or more and 5.5 or less, and may be 2.5 or more and 5 or less.

### (Others)

The fourth solvent contained in the nonaqueous electrolyte includes, for example, a cyclic ether other than the third solvent, an ester, a nitrile, an amide, and halogen-substituted derivatives of these. The nonaqueous electrolyte may contain one kind of fourth solvent, or two or more kinds of fourth solvents in combination. The halogen-substituted derivatives have a structure in which at least one hydrogen element is replaced with halogen element. Examples of the halogen element include at least one selected from fluorine element, chlorine element, bromine element, and iodine element.

The cyclic ether is exemplified by 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineole, crown ether, and the like.

The ester is exemplified by a carbonic acid ester, a carboxylic acid ester, and the like. Examples of a cyclic carbonic acid ester include ethylene carbonate, propylene carbonate, butylene carbonate, and fluoroethylene carbonate. Examples of a chain carbonate ester include dimethyl carbonate, ethyl methyl carbonate, diethyl carbonate, methyl propyl carbonate, ethyl propyl carbonate, and methyl isopropyl carbonate. Examples of a cyclic carboxylic acid ester include γ-butyrolactone, and γ-valerolactone. Examples of a chain carboxylic acid ester include methyl acetate, ethyl acetate, propyl acetate, methyl propionate, ethyl propionate, and methyl fluoropropionate.

From the viewpoint that the effects by the first to third solvents are likely to be highly exerted, the first solvent, the second solvent, and the third solvent preferably occupy a higher proportion in the whole solvent contained in the nonaqueous electrolyte. For example, the ratio of the sum of the number of moles M1, M2, and M3 to the number of moles of the whole solvent is, for example, 80 mol% or more, may be 90 mol% or more, and may be 100 mol%.

The nonaqueous electrolyte may contain an additive. The additive may form a surface film on the negative electrode. With a surface film derived from the additive formed on the negative electrode, the growth of the dendrites can be further suppressed. Examples of the additive include vinylene carbonate and vinylethylene carbonate. The amount of the additive may be, for example, 5 mass% or less in the nonaqueous electrolyte.

### (Positive electrode)

The positive electrode includes, for example, a positive electrode current collector, and a positive electrode mixture layer formed on a surface of the positive electrode current collector. The positive electrode current collector may be sheet-like (e.g., foil, film), and may be porous. The positive electrode mixture layer may be formed on a pair of principal surfaces or on one principal surface of a sheet-like positive electrode current collector. Alternatively, the positive electrode mixture layer may be formed in a packed state in a mesh-like positive electrode current collector.

As the material of the positive electrode current collector, for example, a metal material including Al, Ti, Fe, and the like can be used. The metal material may be Al, an Al alloy, Ti, a Ti alloy, an Fe alloy, and the like. The Fe alloy may be stainless steel.

The positive electrode mixture layer contains a positive electrode active material. The positive electrode mixture layer may contain, in addition to the positive electrode active material, at least one selected from the group consisting of a binder, a conductive material, a thickener, and an additive. Between the positive electrode current collector and the positive electrode mixture layer, a conductive carbonaceous material may be disposed, as necessary.

As the positive electrode active material, a material that electrochemically absorbs and releases lithium ions is used. Such a material may be at least one selected from the group consisting of a lithium-containing transition metal oxide, a transition metal fluoride, a polyanion, a fluorinated polyanion, and a transition metal sulfide. In view of its high average discharge voltage and its cost advantage, the positive electrode active material may be a lithium-containing transition metal oxide.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one kind or two or more kinds of transition metal elements. The transition metal element may be at least one selected from the group consisting of Co, Ni, and Mn. The lithium-containing transition metal oxide can contain one kind or two or more kinds of typical metal elements, as necessary. Examples of the typical metal element include Mg, Al, Ca, Zn, Ga, Ge, Sn, Sb, Pb, and Bi. The typical metal element may be Al and the like.

As the binder, for example, a fluorocarbon resin, a polyacrylonitrile, a polyimide resin, an acrylic resin, a polyolefin resin, and a rubbery polymer can be used. Examples of the fluorocarbon resin include polytetrafluoroethylene and polyvinylidene fluoride.

As the conductive material, for example, a conductive carbonaceous material can be used. Examples of the conductive carbonaceous material include carbon black, carbon nanotubes, and graphite. Examples of the carbon black include acetylene black and Ketjen black.

As the thickener, for example, a cellulose derivative, such as cellulose ether, can be used. Examples of the cellulose derivative include carboxymethyl cellulose (CMC) and a modified product thereof, and methyl cellulose. The modified product of CMC includes a salt of CMC. Examples of the salt include an alkali metal salt (e.g., sodium salt) and an ammonium salt.

As the carbonaceous material disposed between the positive electrode current collector and the positive electrode mixture layer, for example, at least one selected from the conductive carbonaceous materials exemplified as the conductive material can be used.

The positive electrode can be obtained by, for example, applying or packing a slurry containing constituent components of the positive electrode mixture layer and a dispersion medium onto or into a positive electrode current collector, followed by drying and compressing the applied film. A conductive carbonaceous material may be applied, as necessary, onto a surface of the positive electrode current collector. As the dispersion medium, at least one selected from the group consisting of water and an organic medium (e.g., N-methyl-2-pyrrolidone) can be used.

### (Negative electrode)

The negative electrode includes a negative electrode current collector. The negative electrode current collector is usually constituted of a conductive sheet. The conductive sheet may be constituted of a conductive material other than lithium metal and lithium alloys. The conductive material may be a metal material, such as a metal and an alloy. The metal material may be a material that is not reactive with lithium. Specifically, the metal material may be a material that forms neither an alloy nor an intermetallic compound with lithium. Such a metal material includes, for example, copper, nickel, iron, and alloys containing these metal elements. The alloy may be a copper alloy, stainless steel, and the like. In view of their high electrical conductivity, by which high capacity and high charge-discharge efficiency are likely to be ensured, the metal material may include at least one of copper and a copper alloy. The conductive sheet may contain one kind or two or more kinds of these conductive materials.

As the conductive sheet, foil, film, and the like are used. The conductive sheet may be porous. From the viewpoint of ensuring high electrical conductivity, the conductive sheet may be a metal foil, and may be a metal foil containing copper. Such a metal foil may be a copper foil or a copper alloy foil.

Note that, in view of ensuring high volume energy density, the negative electrode may include only a negative electrode current collector, in a fully discharged state of the lithium-metal secondary battery. Furthermore, in view of ensuring high charge-discharge efficiency, in a fully discharged state, the negative electrode may include a negative electrode current collector and a negative electrode active material layer disposed on a surface of the negative electrode current collector. In assembling a battery, only the negative electrode current collector may be used as the negative electrode, or a negative electrode including a negative electrode active material layer and a negative electrode current collector may be used.

As the negative electrode active material contained in the negative electrode active material layer, for example, metal lithium, a lithium alloy, a material that reversibly absorbs and releases lithium ions, and the like can be used. The negative electrode active material may be a negative electrode active material as used in lithium-ion batteries. Examples of the lithium alloy include a lithium-aluminum alloy. Examples of the material that reversibly absorbs and releases lithium ions include a carbon material, and an alloy-type material. The carbon material is exemplified by a graphite material, soft carbon, hard carbon, amorphous carbon, and the like. The alloy-based material is exemplified by a silicon-containing material and a tin-containing material. The alloy-based material may be, for example, elementary silicon, a silicon alloy, a silicon compound, elementary tin, a tin alloy, a tin compound, and the like. Each of the silicon compound and the tin compound may be an oxide, a nitride, and the like. The negative electrode active material layer may contain one kind of negative electrode active material, or two or more kinds of negative electrode active materials in combination.

The negative electrode active material layer may be formed by depositing a negative electrode active material on a surface of the negative electrode current collector using electrodeposition or a gas phase method such as vapor deposition. The negative electrode active material layer may be formed by applying a negative electrode material mixture containing a negative electrode active material, a binder, and other components as necessary, onto a surface of the negative electrode current collector. Examples of other components include a conductive material, a thickener, and an additive.

The thickness of the negative electrode active material layer is not limited to a particular thickness, and is, for example, 30 µm or more and 300 µm or less in a fully discharged state of the lithium-metal secondary battery. The thickness of the negative electrode current collector is, for example, 5 µm or more and 20 µm or less.

In the present disclosure, a fully discharged state of the lithium-metal secondary battery refers to a state in which the battery is discharged until the state of charge (SOC) reaches 0.05×C or less, where C is the rated capacity of the battery. For example, it refers to a state in which the battery is discharged to the lower limit voltage at a constant current of 0.05C. The lower limit voltage is, for example, 2.5 V.

The negative electrode can further include a protective layer. The protective layer may be formed on a surface of the negative electrode current collector, or when the negative electrode has a negative electrode active material layer, it may be formed on the surface of the negative electrode active material layer. The protective layer has an effect of allowing the electrode surface reaction to proceed more uniform, which makes it easier for lithium metal to deposit more uniformly on the negative electrode. The protective layer is constituted of, for example, a material (organic material, inorganic material) that does not inhibit lithium-ion conductivity. As the organic material, a polymer having lithium-ion conductivity, and the like can be used. Examples of such a polymer include polyethylene oxide and polymethyl methacrylate. As the inorganic material, a ceramic, a solid electrolyte, and the like can be used. The protective layer may contain one kind or two or more kinds of these materials.

### (Separator)

The lithium secondary battery may include a separator interposed between the positive electrode and the negative electrode.

For the separator, a porous sheet having ion permeability and electrically insulating properties is used. The porous sheet includes, for example, a microporous film, a woven fabric, and a non-woven fabric. The material of the separator may be a polymer material. The polymer material is exemplified by an olefin resin, a polyamide resin, a cellulose, and the like. Examples of the olefin resin include polyethylene, polypropylene, and a copolymer of ethylene and propylene. The separator may contain an additive, as necessary. Examples of the additive include an inorganic filler.

The separator may include a plurality of layers differing in at least one of the morphology and the composition. Such a separator may be, for example, a laminate of a polyethylene microporous film and a polypropylene microporous film, or a laminate of a non-woven fabric containing cellulose fibers and a non-woven fabric containing thermoplastic resin fibers.

### (Others)

The lithium secondary battery, for example, has a structure in which an electrode group formed by winding the positive electrode and the negative electrode with the separator interposed therebetween is housed in an outer body, together with the nonaqueous electrolyte. In such a structure, the electrode group may be replaced with a different form of electrode group, such as a stacked-type electrode group formed by stacking the positive electrode and the negative electrode with the separator interposed therebetween. The lithium secondary battery may be in any form, such as cylindrical type, prismatic type, coin type, button type, or laminate type.

FIG. 1A is a schematic longitudinal cross-sectional view of a lithium secondary battery according to an embodiment. FIG. 1B is an enlarged cross-sectional view of the lithium secondary battery in a fully discharged state, taken along the line II in FIG. 1A.

A lithium secondary battery 10 is a cylindrical battery including a cylindrical battery case, a wound electrode group 14 housed in the battery case, and a nonaqueous electrolyte (not shown). The battery case is constituted of a case body 15 which is a bottomed cylindrical metal container, and a sealing assembly 16 sealing the opening of the case body 15. A gasket 27 is disposed between the case body 15 and the sealing assembly 16, by which the airtightness of the battery case is ensured. In the case body 15, insulating plates 17 and 18 are disposed at one and the other sides of the wound electrode group 14, respectively.

The case body 15 has a step portion 21 formed by, for example, partially pressing the sidewall of the case body 15 from outside. The step portion 21 may be annularly formed on the sidewall of the case body 15 along the circumferential direction of the case body 15. In this case, the sealing assembly 16 is supported by the surface of the step portion 21 on the opening side.

The sealing assembly 16 has a filter 22, a lower valve body 23, an insulating member 24, an upper valve body 25, and a cap 26. In the sealing assembly 16, these members are stacked together in this order. The sealing assembly 16 is attached at the opening of the case body 15, such that the cap 26 is positioned outside the case body 15, and the filter 22 is positioned inside the case body 15. Each of the above members constituting the sealing assembly 16 is, for example, disk-shaped or ring-shaped. The members except the insulating member 24 are electrically connected to each other.

The electrode group 14 has a positive electrode 11, a negative electrode 12, and a separator 13. The positive electrode 11, the negative electrode 12, and the separator 13 all have a belt-like shape. The positive electrode 11 and the negative electrode 12 are spirally wound with the separator 13 interposed therebetween, such that the width directions of the belt-like positive and negative electrodes 11 and 12 are in parallel with the winding direction. In a cross section perpendicular to the winding axis of the electrode group 14, the positive electrode 11 and the negative electrode 12 are alternately stacked in the radial direction of the electrode group 14, with the separator 13 interposed between these electrodes.

The positive electrode 11 is electrically connected, via a positive electrode lead 19, to a cap 26 serving as a positive electrode terminal. One end of the positive electrode lead 19 is electrically connected to the belt-like positive electrode 11. The positive electrode lead 19 extended from the positive electrode 11 passes through a through-hole (not shown) formed in the insulating plate 17, and extends to the filter 22. The other end of the positive electrode lead 19 is welded to the filter 22 on its surface facing the electrode group 14.

The negative electrode 12 is electrically connected, via a negative electrode lead 20, to the case body 15 serving as a negative electrode terminal. One end of the negative electrode lead 20 is electrically connected to the belt-like negative electrode 12. The other end the negative electrode lead 20 is welded to the inner bottom surface of the case body 15.

As shown in FIG. 1B, the positive electrode 11 includes a positive electrode current collector 30, and a positive electrode mixture layer 31 disposed on each of both surfaces of the positive electrode current collector 30. The negative electrode 12 includes a negative electrode current collector 32. At the negative electrode 12 of the lithium secondary battery 10, lithium metal deposits during charging. On the other hand, the deposited lithium metal dissolves into the nonaqueous electrolyte during discharging.

### [Examples]

The present invention will be specifically described below with reference to Examples and Comparative Examples. It is to be noted, however, that the present invention is not limited to the following Examples.

### «Examples 1 to 8 and Comparative Examples 1 to 9»

Lithium-metal secondary batteries having the structure as illustrated in FIG. 1 were fabricated by the following procedure.

### (1) Production of positive electrode 11

A positive electrode active material, acetylene black serving as a conductive material, and polyvinylidene fluoride serving as a binder were mixed in a mass ratio of 95:2.5:2.5. To the mixture, an appropriate amount of N-methyl-2-pyrrolidone serving as a dispersion medium was added and stirred, to prepare a positive electrode slurry. The positive electrode active material used here was a lithium-containing transition metal oxide containing Ni, Co, and Al.

The positive electrode slurry was applied onto both surfaces of an aluminum foil serving as a positive electrode current collector 30, and dried. The dry material was compressed in its thickness direction using a roller. The resultant stack was cut in a predetermined electrode size, to form a positive electrode 11 having a positive electrode mixture layer 31 on each of both surfaces of the positive electrode current collector 30. Here, in a partial region of the positive electrode 11, an exposed portion was formed where the positive electrode current collector 30 was exposed without the positive electrode mixture layer 31. To the exposed portion of the positive electrode current collector 30, one end of a positive electrode lead 19 made of aluminum was attached by welding.

### (2) Production of negative electrode 12

A negative electrode current collector 32 was formed by cutting an electrolytic copper foil having a thickness of 10 µm into a predetermined electrode size. This negative electrode current collector 32 was used as a negative electrode 12, for fabricating a battery. To the negative electrode current collector 32, one end of a negative electrode lead 20 made of nickel was attached by welding.

### (3) Preparation of nonaqueous electrolyte

In each of the solvents shown in Table 1, a lithium salt was dissolved at a concentration of the lithium salt in the nonaqueous electrolyte of 1 mol/L, to prepare a nonaqueous electrolyte in a liquid form. The lithium salt used here was a lithium hexafluorophosphate (LiPF₆).

### (4) Fabrication of battery

In an inert gas atmosphere, the positive electrode 11 obtained in the above (1), the negative electrode 12 obtained in the above (2) were stacked, with a polyethylene microporous film as a separator 13 interposed therebetween. Specifically, the positive electrode 11, the separator 13, the negative electrode 12, and the separator 13 were stacked in this order. The resultant stack was spirally wound into an electrode group 14. The resultant electrode group 14 was housed in a pouch-like outer body formed of a laminate sheet including an aluminum layer, and after injecting the nonaqueous electrolyte, the outer body was sealed. In this way, a lithium-metal secondary battery was produced.

### (5) Evaluation

The lithium-metal secondary batteries obtained above were subjected to a charge-discharge test by the following procedure, to evaluate their cycle characteristics.

First, in a constant temperature bath at 25 °C, charging of the lithium-metal secondary batteries were performed under the following conditions. Then, after a rest for 20 minutes, discharging was performed under the following conditions.

### (Charging)

A constant-current charging was performed at a current of 0.1 It until the battery voltage reached 4.3 V, and then a constant-voltage charging was performed at a voltage of 4.3 V until the current value reached 0.01 It.

### (Discharging)

A constant-current discharging was performed at a current of 0.1 It until the battery voltage reached 2.5 V.

With the above charging and discharging taken as one cycle, a 100-cycle charge-discharge test was performed. The discharge capacity at the 1st cycle was measured as an initial discharge capacity. The ratio of the discharge capacity at the 100th cycle to the initial discharge capacity was calculated as a capacity retention rate (%).

The evaluation results are shown in Table 1. In Table 1, E1 to E8 are Examples 1 to 8. C1 to C9 are Comparative Examples 1 to 9.

**[Table 1]**

| | solvent | | | molar ratio to Li | molar ratio to third solvent | | | molar ratio | capacity retention rate (%) |
|---|---|---|---|---|---|---|---|---|---|
| | first solvent | second solvent | third solvent | first solvent + third solvent | first solvent | second solvent | third solvent | second solvent / (first solvent + third solvent) | |
| C1 | DME | FE1 | - | 2.0 | - | - | 0 | 2.50 | 62.0 |
| C2 | DME | FE1 | - | 2.5 | - | - | 0 | 2.00 | 63.9 |
| C3 | DME | FE1 | FE2-1 | 4.5 | 0.125 | 1.00 | 1 | 0.89 | 40.2 |
| E1 | DME | FE1 | FE2-1 | 3.0 | 0.50 | 2.00 | 1 | 1.33 | 74.9 |
| E2 | DME | FE1 | FE2-1 | 2.0 | 0.33 | 2.67 | 1 | 2.00 | 70.1 |
| E3 | DME | FE1 | FE2-1 | 3.5 | 0.75 | 2.00 | 1 | 1.14 | 72.2 |
| E4 | DME | FE1 | FE2-1 | 4.0 | 1.67 | 2.00 | 1 | 0.75 | 68.5 |
| E5 | DME | FE1 | FE2-1 | 5.5 | 0.83 | 0.83 | 1 | 0.45 | 67.7 |
| E6 | DME | FE1 | FE2-1 | 2.5 | 0.67 | 2.67 | 1 | 1.60 | 71.4 |
| E7 | DME | FE1 | FE2-2 | 2.5 | 0.67 | 2.67 | 1 | 1.60 | 65.1 |
| E8 | DME | FE1 | FE2-3 | 5.5 | 0.83 | 0.83 | 1 | 0.45 | 67.4 |
| C4 | DME | FE1 | FE2-1 | 8.0 | 3.0 | 2 | 1 | 0.50 | 38.8 |
| C5 | DME | - | FE2-1 | 10.5 | 0.31 | 0 | 1 | 0 | 51.9 |
| C6 | DME | - | FE2-1 | 3.0 | 0.5 | 0 | 1 | 0 | 58.5 |
| C7 | - | - | FE2-1 | 16.0 | 0 | 0 | 1 | 0 | 40.8 |
| C8 | - | FE1 | - | 0 | - | - | 0 | - | - |
| C9 | DME | FE1 | (FEC) | (3.5) | (0.4) | (1.6) | (1) | (1.14) | 0 |

| | | | | | | | | | |
|---|---|---|---|---|---|---|---|---|---|
| DME: CH₃-O-CH₂CH₂-O-CH₃ FEl: CHF₂CF₂CH₂-O-CF₂CHF₂ (fluorination rate 67%) FE2-1: CF₃CH₂-O-CH₂CH₂-O-CH₃ (fluorination rate 25%) FE2-2: CH₃-O-CH₂CF₂CF₂CH₂-O-CH₃ (fluorination rate 28.6%) FE2-3: 3,3,4,4-tetrafluorotetrahydrofuran (fluorination rate 50%) FEC: fluorinated ethylene carbonate | | | | | | | | | |

Table 1 shows that, with a nonaqueous electrolyte in which the second solvent was used alone, the solubility of the solute was low, and the discharge capacity was not obtained from the initial stage (C8). With the nonaqueous electrolyte in which the third solvent was used alone, the capacity retention rate after 100 cycles of charging and discharging was about 40% (C7). When the first solvent was used in combination with one of the second and third solvents, a certain capacity retention rate was ensured (comparison of C8 with C1 and C2, comparison of C7 with C5). However, when three solvents of the first, second, and third solvents were used in combination, with the M1/M3 ratio being less than 0.25 and 3 or more, the capacity retention rate after 100 cycles of charging and discharging was about 40%, which was lower than that when two solvents of the first and second solvents were used in combination, or when two solvents of the first and third solvents were used in combination (comparison of C3 and C4 with C1, C2, C5 and C6). Furthermore, when the first solvent and the second solvent were used in combination with fluorinated ethylene carbonate (FEC), the discharge capacity was 0 at the 100th cycle (C9).

From the results of C1 to C6 and C9, it can be inferred that a higher capacity-retention rate can be obtained by using two solvents of the first and second solvents in combination, or two solvents of the first and third solvents in combination, than by using the first, second and third solvents in combination, or using the first and second solvents in combination with FEC. However, when the first, second, and third solvents were used in combination, by setting the molar ratio M1/M3 to 0.25 or more, high discharge capacity was ensured even after 100 cycles of charging and discharging, and a high capacity-retention rate was obtained (comparison of C1 with E1 to E8). Furthermore, by setting the molar ratio M1/M3 to less than 3, a similarly high capacity-retention rate was ensured (E1 to E8).

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

### [Industrial Applicability]

In the lithium secondary battery according to the present disclosure, high discharge capacity can be obtained even after charging and discharging repeated many times. Therefore, the lithium secondary battery according to the present disclosure is useful for electronic devices, such as mobile phones, smartphones, and tablet terminals, electric vehicles including hybrids and plug-in hybrids, household storage batteries combined with solar cells, and other various applications. However, these are merely examples, and the use of the lithium secondary battery of the present disclosure is not limited to these specific examples.

### [Reference Signs List]

- 10: lithium secondary battery
- 11: positive electrode
- 12: negative electrode
- 13: separator
- 14: electrode group
- 15: case body
- 16: sealing assembly
- 17, 18: insulating plate
- 19: positive lead
- 20: negative lead
- 21: step portion
- 22: filter
- 23: lower valve body
- 24: insulating member
- 25: upper valve body
- 26: cap
- 27: gasket
- 30: positive electrode current collector
- 31: positive electrode mixture layer
- 32: negative electrode current collector

## Claims

1. A lithium secondary battery, comprising:
a positive electrode; a negative electrode; and a nonaqueous electrolyte having lithium-ion conductivity, wherein
lithium metal deposits on the negative electrode during charging, and the lithium metal dissolves from the negative electrode during discharging,
the nonaqueous electrolyte contains a lithium salt, and a solvent,
the solvent includes
a first solvent: a chain ether containing no fluorine element,
a second solvent: a chain fluorinated ether having a fluorination rate of 60% or more, and
a third solvent: a fluorinated ether having a fluorination rate of more than 0% and less than 60%, and
when the number of moles of the first solvent contained in the nonaqueous electrolyte is denoted by M1, and the number of moles of the third solvent contained in the nonaqueous electrolyte is denoted by M3, a molar ratio M1/M3 of the number of moles M1 to the number of moles M3 is 0.25 or more and less than 3.

2. The lithium secondary battery according to claim 1, wherein when the number of moles of the second solvent contained in the nonaqueous electrolyte is denoted by M2, a molar ratio M2/M3 of the number of moles M2 to the number of moles M3 is 0.5 or more and 6 or less.

3. The lithium secondary battery according to claim 1 or 2, wherein when the number of moles of the second solvent contained in the nonaqueous electrolyte is denoted by M2, a molar ratio M2/(M1+M3) of the number of moles M2 to a sum of the number of moles M1 and the number of moles M3 is 0.4 or more and 2 or less.

4. The lithium secondary battery according to any one of claims 1 to 3, wherein a ratio (M1+M3)/M_{L} of a sum of the number of moles M1 and the number of moles M3 to the number of moles M_{L} of Li ions contained in the nonaqueous electrolyte is 1.5 or more and 7 or less.

5. The lithium secondary battery according to any one of claims 1 to 4, wherein the first solvent includes at least one selected from compounds represented by a following formula (1): 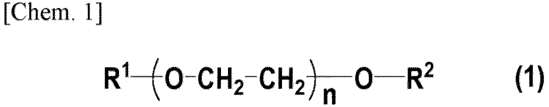 (in the formula, R¹ and R² are each independently an alkyl group having 1 to 5 carbon atoms, and n is an integer of 0 or more and 4 or less.)

6. The lithium secondary battery according to any one of claims 1 to 5, wherein the second solvent includes at least one selected from compounds represented by a following formula (2): 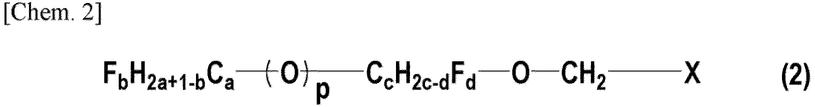 [in the formula, the number a of carbon elements in an alkyl group or a fluorinated alkyl group is an integer of 1 or more, b is the number of fluorine elements, p is 0 or 1, the number c of carbon elements in a fluorinated alkylene group is an integer of 1 or more, the number d of fluorine elements is an integer of 2 or more, and X is a group represented by following formula (2a) or (2b): 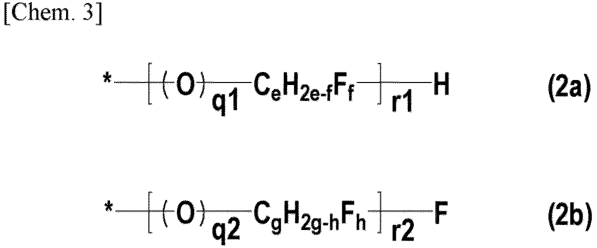 (in the formulas, q1 and q2 are each independently 0 or 1, the numbers e and g of carbon elements in an alkyl group or a fluorinated alkyl group are each independently an integer of 1 or more, and f and h are each the number of fluorine elements, and r1 and r2 are each independently 0 or 1.)]

7. The lithium secondary battery according to claim 6, wherein the numbers a, c, e, and g are each independently an integer of 1 or more and 5 or less.

8. The lithium secondary battery according to any one of claims 1 to 6, wherein the third solvent includes at least one selected from compounds represented by a following formula (3A): 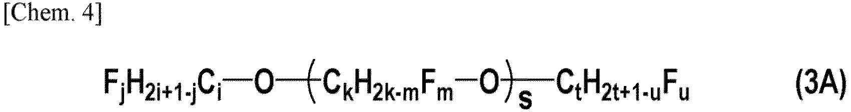 (in the formula, the numbers i and t of carbon elements in an alkyl group or a fluorinated alkyl group are each independently an integer of 1 or more, and the number k of carbon elements in an alkylene group or a fluorinated alkylene group is an integer of 1 or more, j, m, and u each independently represent the number of fluorine elements, and s is an integer of 0 or more and 4 or less.)

9. The lithium secondary battery according to claim 8, wherein the numbers i, k, and t are each independently an integer of 1 or more and 5 or less.

10. The lithium secondary battery according to any one of claims 1 to 9, wherein the third solvent includes at least one selected from compounds represented by a following formula (3B): 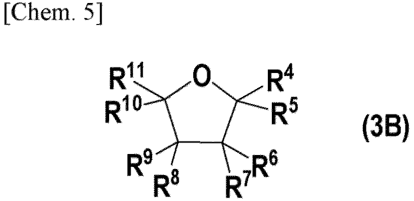 (in the formula, R⁴ to R¹¹ each independently represent hydrogen element, fluorine element, an alkyl group, or a fluorinated alkyl group, and at least one of R⁴ to R¹¹ is fluorine element or a fluorinated alkyl group.)
